(19) Europäisches Patentamt
European Patent Office
Office européen des brevets

(11) Numéro de publication: **0 076 279**
**B1**

# (12) FASCICULE DE BREVET EUROPEEN

(45) Date de publication du fascicule du brevet: **17.09.86**

(51) Int. Cl.⁴: **C 08 B 37/10**, A 61 K 31/725

(21) Numéro de dépôt: **82900970.3**

(22) Date de dépôt: **09.04.82**

(86) Numéro de dépôt international: **PCT/FR 82/00069**

(87) Numéro de publication internationale: **WO 82/03627 (28.10.82** Gazette **82/26)**

## (54) PROCEDE D'OBTENTION DE MUCOPOLYSACCARIDES BIOLOGIQUEMENT ACTIFS, DE PURETE ELEVEE, PAR DEPOLYMERISATION CONTROLEE DE L'HEPARINE.

(30) Priorité: **10.04.81 FR 8107283**

(43) Date de publication de la demande: **13.04.83 Bulletin 83/15**

(45) Mention de la délivrance du brevet: **17.09.86 Bulletin 86/38**

(84) Etats contractants désignés: **AT BE CH DE FR GB LI LU NL SE**

(56) Documents cités:
**WO - A - 81/02737**
**WO - A - 81/03276**
**FR - A - 2 478 646**

**Biochemistry, vol. 15, no. 18, publ. 1976, J.E.Shively et al.: "Formation of anhydrosugars in the Chemical Depolymerization of Heparin", pages 3932-3942**

(73) Titulaire: **CHOAY S.A., 48, Avenue Théophile-Gautier, F-75782 Paris Cédex 16 (FR)**

(72) Inventeur: **LORMEAU, Jean-Claude, 1, rue Joseph Delattre, F-76150 Maromme (FR)**
Inventeur: **PETITOU, Maurice, 27, rue du Javelot, Appt.201, F-75645 Paris Cedex 13 (FR)**
Inventeur: **CHOAY, Jean, 21, rue Saint-Guillaume, F-75007 Paris (FR)**

(74) Mandataire: **Gutmann, Ernest et al, S.C. Ernest Gutmann - Yves Plasseraud 67, boulevard Haussmann, F-75008 Paris (FR)**

**EP 0 076 279 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention est relative à un nouveau procédé d'obtention de compositions de mucopolysaccharides de pureté élevée, biologiquement actifs, par dépolymérisation contrôlée de l'héparine.

Elle concerne plus particulièrement un procédé du type en question permettant d'obtenir un mélange de grande homogénéité en mucopolysaccharides (ces produits seront désignés ci-après par l'abréviation MPS) capables notamment de contrôler, de manière hautement spécifique, certaines étapes de la coagulation sanguine et, en particulier, possédant une activité plus sélective que l'héparine vis-à-vis d'un nombre plus réduit de facteurs de la coagulation, notamment du facteur X activé ou facteur Xa du sang.

Compte-tenu de leurs propriétés, ces MPS constituent de précieux médicaments, notamment antithrombotiques. On conçoit alors l'intérêt, pour les applications thérapeutiques envisagées, de disposer de MPS de pureté élevée, en particulier pratiquement totalement débarassés de tous les contaminants que peut apporter le milieu de réaction, tout en n'ayant recours, pour leur obtention, qu'à des étapes opératoires de mise en œuvre aisée dont le coût et la réalisation permettent une exploitation à l'échelle industrielle.

Pour l'obtention de composés de ce type, les inventeurs se sont plus spécialement intéressés à la dépolymérisation contrôlée de l'héparine sous l'action d'un agent chimique capable de fragmenter les chaînes qui la constituent, en particulier de l'acide nitreux.

On notera que le terme héparine est utilisé dans la description et les revendications dans son sens le plus large, pour désigner indifféremment une préparation d'héparine commerciale de qualité pharmaceutique ou une héparine brute telle qu'obtenue par extraction à partir de matériaux biologiques, en particulier de tissus de mammifères.

La dépolymérisation de l'héparine par l'acide nitreux est rapportée par SHIVELY et al dans Biochemistry, vol. 15, N° 18, 3932–36 (1976) Cependant, les conditions mises en œuvre visent à obtenir une dépolymérisation totale de l'héparine à des fins analytiques et ne permettent donc pas d'obtenir un mélange de dépolymérisation formé de chaînes de MPS possédant les propriétés biologiques recherchées.

Des conditions de dépolymérisation ménagée sont décrites dans la demande internationale WO 81/02737 du 20 mars 1981 au nom de la Demanderesse, déposée sous priorité de la deuxième demande de certificat d'addition No 8 006 282 du 20 mars 1980.

Dans la demande internationale WO 81/03276 du 17 avril 1981, déposée sous priorité de la demande de brevet US s.n. 151, 163 du 19 mai 1980, on rapporte également des conditions pour dépolymériser l'héparine de manière contrôlée sous l'action de l'acide nitreux.

La poursuite des travaux des inventeurs dans ce domaine les a amenés à rechercher de nouvelles conditions permettant d'obtenir des mélanges de dépolymérisation plus satisfaisants au regard des applications thérapeutiques envisagées, en particulier, des mélanges dépourvus de contaminants du type des nitrites et des nitrates et plus homogènes grâce à des taux de dépolymérisation plus élevés.

Les travaux effectués ont alors montré qu'en choisissant l'un des paramètres de la réaction en fonction des autres paramètres utilisés, il était possible d'obtenir avec de hauts rendements, un mélange de dépolymérisation à activité anti-Xa (YW) élevée, d'une manière générale supérieure à 200 u, voire 250, pratiquement exempt de contaminants du type nitrites-nitrates et d'éviter, durant la réaction, le contrôle de la dépolymérisation pour arrêter cette dernière lorsque le degré souhaité est atteint.

L'invention a donc pour but de fournir un nouveau procédé permettant d'obtenir des MPS particulièrement précieux au regard des propriétés biologiques souhaitées, tout en étant pratiquement exempts de tous contaminants tels que nitrites et nitrates et qui se trouvent donc par là sous une forme particulièrement appropriée pour leurs applications en thérapeutique.

Elle a également pour but de fournir un procédé permettant d'obtenir ces MPS sans avoir à exercer un contrôle rigoureux de la durée de réaction pour arrêter cette dernière dès que le degré de dépolymérisation souhaité est atteint, le degré de dépolymérisation étant ajusté à volonté.

Elle vise également à fournir un procédé dont la mise en œuvre à l'échelle industrielle est rendue extrêmement aisée en raison des conditions particulières choisies pour la dépolymérisation contrôlée de l'héparine.

Le procédé d'obtention de mucopolysaccharides ou MPS biologiquement actifs, de pureté élevée, par dépolymérisation contrôlée de l'héparine, est caractérisé en ce qu'il comprend la réaction de l'héparine et de l'acide nitreux en milieu aqueux à un pH de 2 à 3, avantageusement voisin de 2,5, en des quantités telles que la concentration d'héparine est d'au moins 8% en poids et la molarité de l'acide nitreux est de 0,02 à 0,1 M, ces données étant calculées par rapport à la totalité du mélange des réactifs mis en œuvre, et, après que la réaction de dépolymérisation se soit arrêtée d'elle-même par épuisement de l'acide nitreux, la récupération du mélange de MPS du type de ceux précipitables par un solvent alcoolique.

L'intérêt de ces dispositions s'avère particulièrement précieux au regard des applications biologiques envisagées pour les produits. En effet, les compositions de MPS récupérées du mélange de dépolymérisation sont pratiquement totalement exemptes de produits toxiques. En particulier, ces compositions ne renferment pas de nitrites ni de nitrates. Etant donné la consommation totale de l'acide nitreux et l'élimination sous forme gazeuse des produits contenant de l'azote, de tels dérivés peuvent se former, ce qui permet d'éviter, après la réaction, toute contamination, par des composés nitrés toxiques, des compositions obtenues.

Ce procédé présente, en outre, un avantage considérable au niveau de la technique de réalisation.

En effet, grâce aux dispositions utilisées, la réaction de dépolymérisation en quelque sorte «s'autorégule», s'arrêtant d'elle-même lorsque le degré de dépolymérisation voulu est obtenu.

On se libère ainsi de la contrainte du contrôle de la durée des réactions qui est rendu nécessaire dans les techniques antérieures afin d'éviter une dépolymérisation trop avancée des chaînes de l'héparine.

Conformément à l'invention, au lieu de se conformer à la cinétique de réaction découlant des paramètres utilisés jusqu'alors et, notamment, des concentrations en réactifs, on choisit la concentration en produits engendrant l'acide nitreux de manière à obtenir la dépolymérisation recherchée afin que la dépolymérisation s'arrête du fait de la disparition, par consommation totale, de l'un des réactifs, lorsque les produits souhaités sont obtenus.

La quantité d'acide nitreux mise en œuvre, ou de produits utilisés pour l'engendrer in situ, doit être suffisante pour obtenir un rendement satisfaisant en produits de dépolymérisation de la qualité souhaitée, mais ne doit pas dépasser une limite au-delà de laquelle, compte-tenu de la quantité d'héparine mise en œuvre, l'acide nitreux ne serait pas entièrement consommé.

Selon un mode préféré de réalisation de l'invention, on met ainsi en œuvre de 0,02 M à 0,1 M notamment de 0,03 M à 0,05 M de $NaNO_2$ avec une solution d'héparine à 8 à 12% en poids.

Les dispositions ci-dessus sont avantageusement mises en œuvre dans un procédé de dépolymérisation contrôlée d'héparine dans lequel, les conditions de la réaction autres que les concentrations en réactifs, permettent plus spécialement l'obtention de MPS ayant une activité anti-Xa (Yin-Wessler) d'au moins 200 u/mg, avantageusement supérieure à 250 u/mg, une activité USP ou APTT inférieure à 30 ui avantageusement inférieure à 20 ui ou voire à 10 ui et un rapport de leur titre Y-W/USP ou de leur titre YW/APTT d'au moins 3, avantageusement supérieure à 6, voire 10 ou plus, formés d'une majeure partie d'espèces ayant un poids moléculaire de 2000 à 8000 daltons environ (déterminé par la méthode HPLC).

On rappelle que le titre Yin-Wessler traduit plus spécifiquement la capacité des fractions actives à potentialiser l'inhibition du facteur Xa du sang par l'antithrombine III dans le test correspondant, mesuré selon la technique de ces auteurs qui est décrite dans «J. Lab. Clin. Med.», 1976, 81, 298–300.

Le titre USP qui permet de mesurer une intensité de coagulation globale dans des conditions bien déterminées est également bien connu. On le détermine comme décrit dans la Pharmacopée des Etats-Unis XIX, pp 229–230 (voir aussi le Second Supplément USP-NF, p. 62, et le Quatrième Supplément USP-NF, page 90, respectivement intitulés «Drug Substances and Dosage Forms» (substances médicamenteuses et modes de dosage)).

Le titre APTT (abréviation du terme anglais «activated partial thromboplastin time») mesure également l'activité anticoagulante globale. Ce titre est l'équivalent du temps de Céphaline-Kaolin mesuré selon J. Caen et al «l'hémostase», édition extension scientifique, 1976, p. 169–170.

D'un manière préférée, la matière première mise en œuvre dans le procédé de l'invention est constituée par une héparine possédant un poids moléculaire de 2000 à 50 000 environ.

Il peut s'agir d'une héparine de qualité pharmaceutique classique, injectable, ou d'une héparine brute telle qu'elle est obtenue à l'issue des opérations d'extraction de ce principe actif à partir de tissus ou d'organes de mammifères, notamment de mucus d'intestins ou de poumons, par exemple de porc ou de bœuf. Elle peut encore être constituée par les produits qui sont normalement écartés lors de la purification d'une héparine en vue de l'obtention d'une héparine de qualité injectable et d'activité spécifique plus élevée.

L'héparine mise en œuvre est soumise, dans des conditions contrôlées, à l'action de l'acide nitreux. Cet acide peut être ajouté à l'héparine ou formé in situ par addition, selon des quantités contrôlées, d'un acide, à un dérivé de l'acide nitreux, en particulier, un sel, un éther-sel, plus spécialement un sel alcalin ou alcalino-terreux.

Dans un mode de réalisation avantageux de l'invention, on utilise comme sel de l'acide nitreux, un sel hydrosoluble, plus spécialement un sel alcalin tel que le nitrite de sodium $NaNO_2$.

Pour engendrer in situ l'acide nitreux, on ajoute des quantités contrôlées d'un acide comportant avantageusement des anions biologiquement acceptables, tels que l'acide acétique et plus spécialement l'acide chlorhydrique.

L'action de l'acide nitreux sur l'héparine est avantageusement effectuée dans un milieu physiologiquement acceptable, permettant ainsi d'éviter tout problème pouvant être entraîné par l'élimination d'un solvant nuisible pour les applications biologiques envisagées. A cet égard, l'eau constitue le milieu réactionnel préféré.

Conformément à l'invention, les concentrations en héparine et en acide nitreux de la solution sont choisies de manière telles que, lorsque le degré de dépolymérisation souhaité est atteint, l'acide nitreux soit totalement consommé, les autres paramètres intervenant pour la réalisation de cette réaction, en particulier la température et le pH, étant par ailleurs également ajustés les uns aux autres afin d'obtenir les produits désirés dans les conditions expérimentales les plus satisfaisantes.

L'étude de ces conditions expérimentales par les inventeurs a montré qu'il est nécessaire de mettre en œuvre l'héparine et les produits engendrant l'acide nitreux selon des quantités conduisant à une concentration d'au moins 8% en poids de la solution en héparine, avantageusement de l'ordre de 8 à 12%, spécialement voisine de 10%, la concentration en nitrite de sodium étant alors de 0,02 M à 0,1 M et de préférence de 0,05 M et

mieux encore 0,055 M. Compte-tenu des concentrations élevées en héparine, les volumes à manipuler pour la mise en œuvre du procédé selon l'invention, sont considérablement réduits, d'un facteur d'au moins 5 par rapport aux techniques chimiques habituelles.

Les essais réalisés ont montré qu'il était approprié d'opérer de 0 à 30 °C environ. Des températures inférieures à 10 °C peuvent être utilisées pour l'obtention des produits recherchés. Avantageusement, on opère à l'ambiante. On utilise l'acide en quantités permettant d'obtenir le pH désiré avantageusement de 2 à 3 environ, de préférence voisin de 2,5.

Comme déjà souligné, ces conditions permettent de se libérer d'un contrôle rigoureux de la durée de la réaction. Elles autorisent en effet une autorégulation de la réaction de dépolymérisation contrôlée selon un principe qui se distingue de celui mis en œuvre dans les procédés connus, ce qui se traduit par une différence au niveau des résultats, à savoir l'absence de nitrites et nitrates dans le milieu réactionnel en fin de réaction, les composés azotés formés étant volatils.

Ces conditions permettent en outre l'obtention spécifique de produits répondant à un profil donné qui sera précisé ci-après.

Lorsque l'acide nitreux mis en œuvre est épuisé, le degré de dépolymérisation souhaité est atteint et on précipite du milieu de dépolymérisation les produits du type de ceux qui sont précipitables par l'alcool. Auparavant, on réajuste avantageusement le pH à une valeur voisine de la neutralité.

Pour l'opération de précipitation, on a avantageusement recours à de l'éthanol absolu. Les essais effectués ont permis de constater qu'en utilisant environ 2 volumes d'éthanol, on obtenait la précipitation souhaitée des MPS biologiquement actifs. On notera le faible volume de solvant utilisé pour cette précipitation ce qui présente de nombreux avantages au niveau des manipulations.

Le précipité formé est récupéré et, en vue de son utilisation, lavé et séché.

La mise en œuvre des dispositions qui précèdent permet d'obtenir des produits caractérisés notamment par les points suivants.

Ces produits, comme les MPS décrits dans la demande de brevet FR 7 831 357 du 6.11.1978 au nom de la Demanderesse, sont solubles dans un milieu hydroalcoolique (eau-méthanol), ayant un titre de 55-61°GL, de préférence de 58° GL; ils tendent vers l'insolubilité dans un mileiu eau-éthanol dont la teneur en alcool est plus élevée; ils sont insolubles dans l'alcool pur. Ils présentent, en outre, des titres Y–W d'au moins 200 u/mg avantageusement supérieurs à 250 u/mg et des titres USP ou APTT inférieurs à 50 ui, avantageusement 30 ui, voire à 20, et des rapports de titres U–W à USP ou APTT d'au moins 3, de préférence supérieurs à 6, notamment supérieurs à 10; ils comportent des motifs terminaux possédant la structure de base 2,5-anhydro-D-manno dont la fonction alcool primaire en 6 est substituée ou non par un groupe $-SO_3^-$.

Ce motif terminal répond à la formule suivante:

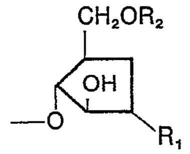

où $R_1$ représente un groupement fonctionnel choisi parmi des groupements aldéhyde (–CHO), alcool ($-CH_2OH$) ou acide carboxylique ($-CO_2H$) ou leurs dérivés, notamment les acétals, amides, éthers, esters ou sels correspondants et $R_2$ un atome d'hydrogène ou un groupe $SO_3^-$. Les groupements fonctionnels de $R_1$ autres que le groupe aldéhyde sont introduits avantageusement selon le procédé décrit par la Demanderesse dans la demande de deuxième certificat d'addition FR No 8 006 282 du 20 mars 1980 à la demande de brevet FR No 7 831 357 du 6 novembre 1978.

Dans un aspect avantageux de l'invention, $R_1$ est constitué par un groupe aldéhyde. Dans un autre aspect $R_1$ est constitué par un groupe acide carboxylique ou encore alcool, ces groupes présentant notamment l'avantage d'une stabilité élevée.

De préférence encore, les produits obtenus selon l'invention sont constitués par une majeure partie d'espèces de poids moléculaire de 2000 à 8000 daltons environ, ce qui correspond à des structures ayant de 8 à 26 entités saccharidiques environ (les poids moléculaires sont mesurés comme indiqué ci-dessus selon la méthode HPLC, à l'aide, par exemple, d'un tampon de sulfate de sodium 0,5 M).

Tels qu'ils sont obtenus, ces produits sont dépourvus de contaminants de type nitrates-nitrites.

D'une manière générale, ces produits sont particulièrement précieux en raison de leurs propriétés pharmacologiques de grand intérêt. Ils possèdent, en effet, une activité anti-Xa (YW) bien supérieure à celle de l'héparine de départ alors que leur titre USP ou APTT (qui traduit l'activité anticoagulante globale) peut être très inférieur à celui de l'héparine, ce qui facilite leur utilisation et diminue les risques d'accidents hémorragiques.

Ils sont donc avantageusement utilisables comme médicaments, notamment, antithrombotiques.

De plus, leur faible poids moléculaire par rapport à celui de l'héparine de départ leur confère une pharmacocinétique retardée d'un grand intérêt en thérapeutique. Ils peuvent en outre être avantageusement utilisés par voie orale.

Les conditions rapportées ci-dessus de mise en œuvre du procédé de l'invention peuvent conduire avantageusement à des compositions ne renfermant pratiquement plus de chaînes hépariniques normales, c'est-à-dire de chaînes de l'héparine de départ. Il s'agit, en effet, d'un procédé à haut rendement.

Il est donc ainsi possible de disposer de compositions de MPS de grande homogénéité en poids

moléculaire compris dans la gamme indiquée plus haut, renfermant avantageusement au moins 98% environ de MPS tels qu'évoqués ci-dessus.

Selon le composé de départ, ce caractère homogène peut cependant être modifié.

D'autres caractéristiques et avantages de l'invention apparaîtront dans les exemples qui suivent.

EXEMPLE 1:

Dépolymérisation auto-régulée de l'héparine et obtention de MPS de bas poids moléculaire

Dans 15 litres d'eau distillée à +20 °C, on dissout 1500 grammes d'héparine commerciale ayant un rapport YW/USP voisin de 1 et un titre USP de 160 ui. On ajoute 51,8 g de nitrite de sodium dissous dans 300 ml d'eau distillée, et immédiatement le pH est abaissé à 2,5 par de l'acide chlorhydrique pur.

La réaction s'opère alors et on vérifie son déroulement jusqu'à l'absence d'ions nitreux. Au bout de 40 minutes, on détermine à intervalles réguliers la présence ou l'absence d'ions nitreux dans le milieu réactionnel. On utilise, par exemple, du papier iodoamidonné en effectuant la vérification toutes les 5 minutes. Au bout d'environ 60 minutes de réaction, l'acide nitreux a été entièrement consommé et il ne substiste plus d'ions $NO_2^-$ dans le milieu réactionnel. Le pH est alors ajusté à 7 par de la soude pure, et les produits de la réaction sont récupérés par addition de 31 litres d'éthanol pur (2 volumes).

Le précipité formé est collecté par centrifugation, lavé à l'éthanol et séché à 60 °C sous vide.

On recueille 1200 g de produits présentant les caractéristiques suivantes:

| | |
|---|---|
| Titre USP | 19 ui/mg |
| Titre APTT | 13 ui/mg |
| Titre Yin et Wessler | 202 u/mg |
| Teneur en nitrites/nitrates | < 4 ppm |

EXEMPLE 2

En procédant comme dans l'exemple 1, en partant d'une solution d'héparine à 10% (100 g/l), on obtient des MPS présentant les rapports YW/USP selon la quantité de $NaNO_2$ mise en œuvre, à savoir:

| $NaNO_2$ | Titres YW/USP | Valeur du rapport des titres |
|---|---|---|
| 0,03 M | (140/51) | 2,7 |
| 0,04 M | (214/26) | 8 |
| 0,05 M | (250/19) | 13 |
| 0,06 M | (194/12) | 16 |
| 0,07 M | (201/9) | 22 |
| 0,08 M | (132/6,4) | 19 |
| 0,1 M | (110/2) | 44 |

Des MPS préférés correspondent à ceux obtenus en utilisant de 0,03 à 0,07 M, notamment de 0,03 à 0,05 M et plus spécialement ceux obtenus à 0,05 M.

EXEMPLE 3

Dans 10 litres d'eau distillée, à température ambiante (15–20 °C) on dissout 1000 grammes d'héparine injectable, commerciale, ayant un titre USP de 170 ui/mg et un titre YW de 160 u/mg. On ajoute 38 g de nitrite de sodium (molarité finale 0,055 M) dissous dans 200 ml d'eau. Le pH est immédiatement abaissé à 2,5 par de l'acide chlorhydrique pur. On contrôle la réaction comme dans l'exemple 1 à intervalles de temps réguliers (5–10 minutes). Au bout d'environ 30 minutes, on ne détecte plus d'ions $NO_2^-$ dans le milieu réactionnel. Le pH est alors ajusté à 7 par de la soude 5 N; les produits de la réaction sont récupérés par addition de 21 litres d'éthanol pur (2 volumes). Le précipité formé est recueilli par centrifugation, lavé à l'éthanol et séché à 60 °C sous vide.

On obtient finalement 780 grammes de poudre, de couleur blanche, ayant les caractéristiques suivantes:

| | |
|---|---|
| Titre USP: | 22 ui/mg |
| Titre Yin et Wessler: | 260 u/mg |
| Titre APTT: | 10 ui/mg |
| Teneur en nitrites-nitrates: | < 5 ppm |
| Poids moléculaire moyen: | inférieur à 6000 |
| Pourcentage d'espèces dont le poids moléculaires excède 10 000: | inférieur à 1%. |

## Revendications

1. Procédé d'obtention de mucopolysaccharides ou MPS biologiquement actifs, de pureté élevée, par dépolymérisation contrôlée de l'héparine, caractérisé en ce qu'il comprend la réaction de l'héparine et de l'acide nitreux en milieu aqueux à un pH de 2 à 3, avantageusement voisin de 2,5, en des quantités telles que la concentration d'héparine est d'au moins 8% en poids et la molarité de l'acide nitreux est de 0,02 à 0,1 M, ces données étant calculées par rapport à la totalité du mélange des réactifs mis en œuvre, et, après que la réaction de dépolymérisation se soit arrêtée d'elle-même par épuisement de l'acide nitreux, la récupération du mélange de MPS du type de ceux précipitables par un solvant alcoolique.

2. Procédé selon la revendication 1, caractérisé en ce que la concentration finale d'héparine du milieu réactionnel aqueux est de 8 à 12% en poids.

3. Procédé selon la revendication 1 ou 2, caractérisé en ce que l'acide nitreux est engendré in situ par addition, selon des quantités contrôlées, d'un acide comportant avantageusement des anions biologiquement acceptables, à un dérivé de l'acide nitreux, en particulier, un sel, un éther-sel et plus spécialement un sel alcalin ou alcalino-terreux.

4. Procédé selon la revendication 3, caractérisé en ce qu'on utilise du nitrite de sodium.

5. Procédé selon la revendication 1 ou 2, caractérisé en ce que la concentration en nitrite de sodium est de 0,05 M, avantageusement de 0,055 M.

6. Procédé selon la revendication 3, caractérisé en ce que l'acide nitreux est engendré in situ par addition d'acide acétique ou d'acide chlorhydrique à du nitrite de sodium.

7. Procédé selon l'une quelconque des revendications 1 à 6, caractérisé en ce qu'on opère à une température comprise entre 0 et 30 °C, avantageusement voisine de l'ambiante.

8. Procédé selon l'une quelconque des revendications précédentes, caractérisé en ce que, lorsque le degré de dépolymérisation souhaité est atteint, on précipite du milieu réactionnel les produits du type de ceux qui sont précipitables par l'alcool, le pH étant avantageusement ajusté au préalable à une valeur voisine de la neutralité.

9. Procédé selon la revendication 8, caractérisé en ce qu'on effectue la précipitation à l'aide d'éthanol.

10. Procédé selon l'une quelconque des revendications précédentes, caractérisé en ce que le mélange de MPS récupérés est formé, pour plus de 98%, de MPS ayant un poids moléculaire de 2000 à 8000 daltons essentiellement dépourvus de contaminants de type nitrite-nitrate et dont les chaînes sont terminées par des groupes de structure 2,5-anhydro-D-manno.

11. Procédé selon l'une quelconque des revendications 1 à 9, caractérisé en ce que les groupes 2,5-anhydromanno sont soumis à un traitement de réduction ou d'oxydation pour obtenir respectivement des groupes 2,5-anhydro-D-mannitol ou acide 2,5-anhydro-D-mannonique.

12. Compositions de MPS du type de ceux obtenus par le procédé selon l'une quelconque des revendications 1 à 11, caractérisés en ce qu'il s'agit d'un mélange formé d'au moins 98% en poids de mucopolysaccharides:

a) ayant un poids moléculaire de 2000 à 8000, avantageusement de poids moléculaire moyen inférieur à 6000;

b) essentiellement dépourvus de contaminants de type nitrite-nitrate;

c) dotés de propriétés anti-thrombotiques, dont l'activité anti-Xa (YW) est supérieure à celle de l'héparine et l'activité USP ou APTT inférieure à celle de l'héparine et

d) possédant un motif terminal de structure 2,5-anhydro-D-manno de formule:

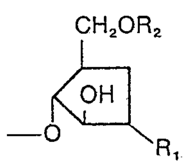

dans laquelle $R_1$ représente un groupe aldéhyde ($-CHO$), alcool ($-CH_2OH$) ou acide ($-CO_2H$) et $R_2$ représente un atome d'hydrogène ou un groupe $-SO_3^-$.

## Claims

1. A process for the preparation of highpurity, biologically active mucopolysaccharides or MPS by controlled depolymerization of heparin, characterised in that it comprises reacting heparin and nitrous acid in an aqueous medium at a pH of 2 to 3, advantageously about 2.5, in quantities such that the heparin concentration is at least 8% by weight and the molarity of the nitrous acid is 0.02 to 0.1 M, these data being calculated with respect to the total quantity of the mixture of the reactants used, and, after the depolymerization reaction has stopped of its own accord by exhaustion of the nitrous acid, recovery of the mixture of MPS of the type which can be precipitated by an alcoholic solvent.

2. A process according to claim 1, characterised in that the final heparin concentration of the aqueous reaction medium is 8 to 12% by weight.

3. A process according to claim 1 or 2, characterised in that the nitrous acid is produced in situ by the addition, in controlled quantities, of an acid advantageously having biologically acceptable anions, to a derivative of the nitrous acid, particularly a salt, an ester, and more particularly an alkali metal or alkaline-earth metal salt.

4. A process according to claim 3, characterised in that sodium nitrite is used.

5. A process according to claim 1 or 2, characterised in that the sodium nitrite concentration is 0.05 M, advantageously 0.055 M.

6. A process according to claim 3, characterised in that the nitrous acid is produced in situ by the addition of acetic acid or hydrochloric acid to sodium nitrite.

7. A process according to any one of claims 1 to 6, characterised in that the process is carried out at a temperature of between 0 and 30 °C, advantageously near ambient temperature.

8. A process according to any one of the preceding claims, characterised in that when the required degree of depolymerization has been reached the products of the type which can be precipitated by alcohol are precipitated from the reaction medium, the pH advantageously being adjusted beforehand to a value close to neutrality.

9. A process according to claim 8, characterised in that the precipitation is carried out by means of ethanol.

10. A process according to any one of the preceding claims, characterised in that the mixture of recovered MPS is formed, insofar as concerns more than 98%, by MPS having a molecular weight for from 2000 to 8000 daltons fundamentally free from contaminants of the nitrite-nitrate type and the chains of which are terminated by groups of 2,5-anhydro-D-manno structure.

11. A process according to any one of claims 1 to 9, characterised in that the 2,5-anhydromanno groups are subjected to a reduction or oxidation treatment to produce respectively 2,5-anhydro-D-mannitol or 2,5-anhydro-D-mannonic acid groups.

12. MPS compositions of the type produced by the process according to any one of claims 1 to 11, characterised in that the mixture is formed by at least 98% by weight of mucopolysaccharides:

a) having a molecular weight of 2000 to 8000, advantageously of a mean molecular weight less than 6000;

b) fundamentally free from contaminants of the nitrite-nitrate type;

c) having anti-thrombotic properties, the anti-Xa (YW) activity of which is greater than that of heparin and the USP or APTT activity less than that of heparin and

d) having a 2,5-anhydro-D-manno structure terminal group of the formula

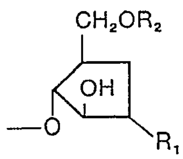

where $R_1$ denotes an aldehyde group (–CHO), an alcohol group ($-CH_2OH$) or an acid group ($-CO_2H$) and $R_2$ denotes a hydrogen atom or an $-SO_3^-$ group.

**Patentansprüche**

1. Verfahren zur Herstellung von biologisch aktiven Mucopolysacchariden (MPS) von erhöhter Reinheit durch kontrollierte Depolymerisation von Heparin, dadurch gekennzeichnet, dass man Heparin in wässerigem Medium bei einem pH von 2 bis 3, vorzugsweise um 2,5, mit salpetriger Säure umsetzt, und zwar in solchen Mengen, dass die Heparinkonzentration mindestens 8 Gew.-% und die Molarität der salpetrigen Säure 0,02 bis 0,1 M beträgt, jeweils bezogen auf das gesamte eingesetzte Gemisch an Reagenzien, wonach man, nachdem die Depolymerisationsreaktion durch Erschöpfung der salpetrigen Säure von selbst zum Stillstand gekommen ist, das Gemisch von mit einem alkoholischen Lösungsmittel abtrennbaren MPS abtrennt.

2. Verfahren nach Anspruch 1, dadurch gekennzeichnet, dass die Heparinendkonzentration des wässerigen Reaktionsmediums 8 bis 12 Gew.-% beträgt.

3. Verfahren nach Anspruch 1 oder 2, dadurch gekennzeichnet, dass die salpetrige Säure in situ durch Zugabe von kontrollierten Mengen einer vorteilhafterweise biologisch verträgliche Anionen liefernden Säure einem Derivat der salpetrigen Säure zugesetzt wird, insbesondere einem Salz, einem Ethersalz oder vorzugsweise einem Alkali- oder Erdalkalisalz, gewonnen wird.

4. Verfahren nach Anspruch 3, dadurch gekennzeichnet, dass man Natriumnitrit verwendet.

5. Verfahren nach Anspruch 1 oder 2, dadurch gekennzeichnet, dass die Konzentration von Natriumnitrit 0,05 M, vorteilhafterweise 0,055 M beträgt.

6. Verfahren nach Anspruch 3, dadurch gekennzeichnet, dass die salpetrige Säure in situ durch Zugabe von Essig- oder Chlorwasserstoffsäure zu Nitrit gewonnen wird.

7. Verfahren nach einem der Ansprüche 1 bis 6, dadurch gekennzeichnet, dass man bei einer Temperatur zwischen 0 und 30 °C, vorzugsweise bei Umgebungstemperatur arbeitet.

8. Verfahren nach einem der Ansprüche 1 bis 7, dadurch gekennzeichnet, dass man bei Erreichen des gewünschten Depolymerisationsgrades aus dem Reaktionsmedium die mit Alkohol ausfällbaren Produkte ausfällt, wobei der pH-Wert vorteilhafterweise vorgängig auf einen Wert um den Neutralpunkt eingestellt wird.

9. Verfahren nach Anspruch 8, dadurch gekennzeichnet, dass man die Ausfällung mit Ethanol vornimmt.

10. Verfahren nach einem der Ansprüche 1 bis 9, dadurch gekennzeichnet, dass das Gemisch an abgetrenntem MPS zu mehr als 98% aus MPS mit einem Molekulargewicht von 2000 bis 8000 Dalton besteht, die im wesentlichen Verunreinigungen vom Nitrit-Nitrat-Typ aufweisen und deren Ketten endständige 2,5-Anhydro-D-mannogruppen aufweisen.

11 Verfahren nach einem der Ansprüche 1 bis 9, dadurch gekennzeichnet, dass die 2,5-Anhydro-D-mannogruppen reduziert oder oxydiert werden, um zu entsprechenden 2,5-Anhydro-D-mannitol- oder 2,5-Anhydro-D-mannonsäuregruppen zu gelangen.

12. Zusammensetzung vom MPS-Typ nach einem der Ansprüche 1 bis 11, dadurch gekennzeichnet, dass sie ein Gemisch aus mindestens 98 Gew.-% Mucopolysacchariden mit

a) Molekulargewicht von 2000 bis 8000, vorzugsweise mit einem durchschnittlichen Molekulargewicht von unter 6000,

b) im wesentlichen mit Verunreinigungen vom Nitrit-Nitrat-Typus,

c) mit antithrombotischen Eigenschaften, deren anti-Xa-Aktivität (YW) die von Heparin übertrifft und die USP- oder APTT-Aktivität unter der von Heparin liegt und

d) und einer endständigen 2,5-Anhydro-D-manno-Gruppe der Formel

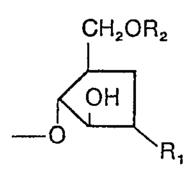

worin $R_1$ eine CHO–, $-CH_2OH$– oder $-CO_2H$-Gruppe und $R_2$ Wasserstoff oder eine $-SO_3$-Gruppe darstellen, besteht.